# EUROPEAN PATENT SPECIFICATION

(11) **EP 3 879 184 B1**
(45) Date of publication and mention of the grant of the patent: **08.04.2026**
(21) Application number: 21158198.8
(22) Date of filing: 19.02.2021
(51) Int. Cl.: F24C 15/20, G10L 25/21, G10L 17/00

(54) **COOKER HOOD AND NOISE REDUCTION METHOD FOR A COOKER HOOD**
DUNSTABZUGSHAUBE UND VERFAHREN ZUR GERÄUSCHVERMINDERUNG EINER DUNSTABZUGSHAUBE
HOTTE DE CUISINE ET PROCÉDÉ DE RÉDUCTION DE BRUIT D'UNE HOTTE DE CUISINE

(30) Priority: 10.03.2020 CN 202010160045
(43) Date of publication of application: 15.09.2021
(73) Proprietor: BSH Hausgeräte GmbH, 81739 München (DE)
(72) Inventor: Yang, Jia, Nanjing, 210046 (CN); Li, Liangliang, Nanjing, 210046 (CN)

(56) References cited:
- WO-A1-2017/211389
- WO-A1-2018/068422
- CN-U- 210 129 919
- US-A1- 2003 161 490
- US-A1- 2015 019 215

## Description

### BACKGROUND

### Technical Field

The present invention concerns a cooker hood and a noise reduction method for a household appliance, namely a cooker hood.

### Related Art

As a kitchen appliance for purifying a kitchen environment, a cooker hood (also referred to as an exhaust hood) has become an indispensable part in family life.

When a user cooks in a kitchen, a cooker hood is usually a largest noise source. If the user needs to make a call and talk to someone else, and the user cannot leave the kitchen, it is easy for noise of the cooker hood to cause strong interference.

In the prior art, the cooker hood is usually provided with a plurality of gears, and different gears correspond to different suction forces, and have different volume. Furthermore, when the interference of the cooker hood needs to be decreased, the user manually turns off the cooker hood or manually lowers the gear, to reduce impacts of the cooker hood.

However, the foregoing method requires the user to operate manually, thereby causing relatively bad experience.

WO 2018/068422 A1 concerns reduction of a fan speed in a cooker hood after voice recognition for controlling said cooker hood fails. US 2015 0019215 A1 proposes a voice recognition unit that is adapted to recognize a person's voice command. Should voice recognition be unsuccessful, a noise reduction signal may be transmitted to another electric equipment. WO 2017 211389 A1 shows a cooking appliance that is adapted to recognize and carry out voice commands given by a user. Different users are distinguished according to stored voice data.

CN 210 129 919 U refers to an intelligent mirror in a bathroom that comprises loudspeakers. US 2003/161490 A1 refers to a cooker hood producing noise, the noise volume of which cannot be lowered.

### SUMMARY

A technical problem resolved in the present invention is to provide a cooker hood and a noise reduction method for a household appliance, namely a cooker hood, which can realize automatic determining and operation, thereby improving user experience.

To resolve the foregoing technical problem, an embodiment of the present invention provides a noise reduction method for a household appliance, including the following steps: acquiring surrounding sound signals in an operating state, and detecting whether the sound signals include a speech signal of a user; and determining, at least according to a detection result, whether to adjust an operating parameter in the operating state, to decrease volume of a sound signal sent by the household appliance.

According to the invention, the present disclosure provides a noise reduction method for a household appliance, namely a cooker hood, the method comprising the following steps:
- acquiring surrounding sound signals in an operating state, and
- detecting whether the sound signals comprise a speech signal of a user;
   wherein the detecting comprises:
   - determining whether the sound signals comprise a speech signal of a person;
   - analyzing, if the speech signal of the person is comprised, voice print information of the speech signal of the person; and
   - determining, according to the voice print information, whether the speech signal belongs to a speech signal of a preset user;
   and
- determining, at least according to a detection result, whether to adjust an operating parameter in the operating state, to decrease volume of a sound signal sent by the household appliance; wherein the determining comprises:
   - determining, if the speech signal of the user is comprised, at least according to a comparison result of the speech signal of the user and the sound signal sent by the household appliance, whether to decrease the volume of the sound signal sent by the household appliance; with the following sub-steps:
      - determining a decibel value of the sound signal sent by the household appliance, and recording the decibel value as device volume;
      - determining a decibel value of the speech signal of the user, and recording the decibel value as user volume; and
      - decreasing, if the device volume is greater than the user volume, the volume of the sound signal sent by the household appliance, until the device volume is less than or equal to the user volume.

Optionally, the determining, at least according to a comparison result of the speech signal of the user and the sound signal sent by the household appliance, whether to decrease the volume of the sound signal sent by the household appliance includes: determining a decibel value of the sound signal sent by the household appliance, and recording the decibel value as device volume; determining a decibel value of the speech signal of the user, and recording the decibel value as user volume; and if the device volume is greater than the user volume, and a lasting duration is greater than or equal to a first preset duration, decreasing the volume of the sound signal sent by the household appliance, until the device volume is less than or equal to the user volume.

Optionally, the noise reduction method for a household appliance further includes: if the sound signal including the speech signal of the user is converted into a sound signal not including the speech signal of the user, and a lasting duration is greater than or equal to a second preset duration, restoring the volume of the sound signal sent by the household appliance to the device volume.

Optionally, the household appliance is a cooker hood, and the decreasing the volume of the sound signal sent by the household appliance includes: decreasing, by decreasing fan power or a fan rotating speed of the cooker hood, the volume of the sound signal sent by the household appliance.

Optionally, the acquiring surrounding sound signals includes: acquiring the surrounding sound signals of the household appliance by using a microphone array.

Optionally, the microphone array is selected from: a double-microphone array and a four-microphone array.

Optionally, the detecting whether the sound signals include a speech signal of a user includes: determining whether the sound signals include a speech signal of a person; if the speech signal of the person is included, analyzing voice print information of the speech signal of the person; and determining, according to the voice print information, whether the speech signal belongs to a speech signal of a preset user.

Optionally, the determining whether the sound signals include a speech signal of a person includes: recognizing whether the sound signals include a speech signal of a person by using a speech recognition technology.

To resolve the foregoing technical problem, the present invention provides a cooker hood according to claim 8.

According to the invention, the present disclosure provides a cooker hood comprising:
a fan;
a speech module, acquiring surrounding sound signals in an operating state; the speech module comprising:
   - a speech determining submodule, configured to determine whether the sound signals comprise a speech signal of a person;
   - a voice print analysis submodule, configured to analyze, when the speech signal of the person is comprised, voice print information of the speech signal of the person; and
   - a speech judging submodule, configured to determine, according to the voice print information, whether the speech signal belongs to a speech signal of a preset user
      and
a processing module
   - detecting whether the sound signals comprise a speech signal of a user, and
   - determining, at least according to a detection result of the speech module, whether to adjust an operating parameter in the operating state, to decrease volume of a sound signal sent by the cooker hood.
wherein the processing module determines, at least according to a comparison result of the speech signal of the user and the sound signal sent by the cooker hood, whether to decrease the volume of the sound signal sent by the cooker hood; and wherein the processing module comprises:
   - a first device volume determining submodule, configured to determine a decibel value of the sound signal sent by the cooker hood, and record the decibel value as device volume;
   - a first speech signal decibel value determining submodule, configured to determine a decibel value of the speech signal of the user, and record the decibel value as user volume; and
   - a first volume processing submodule, configured to decrease, when the device volume is greater than the user volume, the volume of the sound signal sent by the cooker hood, until the device volume is less than or equal to the user volume.

The processing module includes: a first device volume determining submodule, configured to determine a decibel value of the sound signal sent by the cooker hood, and record the decibel value as device volume; a first speech signal decibel value determining submodule, configured to determine a decibel value of the speech signal of the user, and record the decibel value as user volume; and a first volume processing submodule, configured to decrease, when the device volume is greater than the user volume, the volume of the sound signal sent by the cooker hood, until the device volume is less than or equal to the user volume.

Optionally, the first volume processing submodule decreases, by decreasing fan power or a fan rotating speed of the cooker hood, the volume of the sound signal sent by the cooker hood.

Optionally, the processing module includes: a second device volume determining submodule, configured to determine a decibel value of the sound signal sent by the cooker hood, and record the decibel value as device volume; a second speech signal decibel value determining submodule, configured to determine a decibel value of the speech signal of the user, and record the decibel value as user volume; and a second volume processing submodule, configured to decrease, when the device volume is greater than the user volume, and a lasting duration is greater than or equal to a first preset duration, the volume of the sound signal sent by the cooker hood, until the device volume is less than or equal to the user volume.

Optionally, the second volume processing submodule decreases, by decreasing fan power or a fan rotating speed of the cooker hood, the volume of the sound signal sent by the cooker hood.

Optionally, the processing module further includes: a third volume processing submodule, configured to restore, when the sound signal including the speech signal of the user is converted into a sound signal not including the speech signal of the user, and a lasting duration is greater than or equal to a second preset duration, the volume of the sound signal sent by the cooker hood to the device volume.

Optionally, the speech module acquires the surrounding sound signals of the cooker hood by using a microphone array.

Optionally, the microphone array is selected from: a double-microphone array and a four-microphone array.

According to the invention, the speech module includes: a speech determining submodule, configured to determine whether the sound signals include a speech signal of a person; a voice print analysis submodule, configured to analyze, when the speech signal of the person is included, voice print information of the speech signal of the person; and a speech judging submodule, configured to determine, according to the voice print information, whether the speech signal belongs to a speech signal of a preset user.

Optionally, the speech determining submodule recognizes whether the sound signals include a speech signal of a person by using a speech recognition technology.

Compared with the existing technology, the technical solutions of the embodiments of the present invention have the following beneficial effects:
In an embodiment of the present invention, when a household appliance is in an on state, a noise reduction apparatus may acquire surrounding sound signals, and detect whether the sound signals include a speech signal of a user in real time; and if the speech signal of the user is included, determine, at least according to a detection result, whether to adjust an operating parameter in the operating state, to decrease volume of a sound signal sent by the household appliance. By using the foregoing solutions, when the surrounding sound signals of the household appliance include the speech signal of the user, there is an opportunity to decrease the volume of the sound signal sent by the household appliance. Compared with the prior art where a user needs to operate manually, the use of the solutions of the embodiments of the present invention can realize automatic determining and operation, thereby improving user experience.

In the present invention, if the speech signal of the user is included, whether to decrease the volume of the sound signal sent by the household appliance is determined at least according to a comparison result of a speech signal of a preset user and the sound signal sent by the household appliance. By using the foregoing solutions, when interference of the household appliance needs to be decreased, by comparing the speech signal of the preset user with the sound signal sent by the household appliance, whether to decrease the volume of the sound signal sent by the household appliance may be determined. Compared with the prior art where a user needs to operate manually, the use of the solutions of the embodiments of the present invention can realize automatic determining and operation, thereby improving user experience.

Further, in an embodiment of the present invention, the surrounding sound signals of the household appliance are acquired by setting a microphone array. The microphone array is selected from: a double-microphone array and a four-microphone array, which is conducive to forming a mode of three-dimensional sound source positioning, so that the acquired sound signals are more accurate and stereophonic.

Further, in an embodiment of the present invention, a decibel value of the sound signal sent by the household appliance and a decibel value of a speech signal of the user are determined, and only when device volume is greater than the user volume, and a lasting duration is greater than or equal to a first preset duration, volume of the sound signal sent by the household appliance is decreased, which can avoid a case that the volume is decreased when a user makes a very short sound, causing excessively high frequency of decreasing, thereby affecting normal operation of a device.

Further, in an embodiment of the present invention, if the sound signal including the speech signal of the preset user is converted into a sound signal not including the speech signal of the preset user, and a lasting duration is greater than or equal to a second preset duration, the volume of the sound signal sent by the household appliance is restored to the device volume, or the volume of the sound signal sent by the household appliance can be restored after the user speech has ended for a period of time, which is conducive to avoiding a case that the volume is restored when a user has stopped talking for a short period of time, causing excessively high frequency of restoring, thereby affecting normal operation of a device.

### BRIEF DESCRIPTION OF THE DRAWINGS

FIG. 1 is a flowchart of a noise reduction method for a household appliance according to an embodiment of the present invention;
FIG. 2 is a flowchart of a specific implementation of step S11 in FIG. 1;
FIG. 3 is a partial flowchart of a specific implementation of step S12 in FIG. 1;
FIG. 4 is a partial flowchart of another specific implementation of step S12 in FIG. 1;
FIG. 5 is a schematic structural diagram of a noise reduction apparatus for a household appliance according to an embodiment of the present invention; and
FIG. 6 is a schematic structural diagram of a cooker hood according to an embodiment of the present invention.

### DETAILED DESCRIPTION

As described above, in the prior art, when noise of a household appliance causes strong interference, it is generally required that a user manually turns off the household appliance or manually lowers the gear, to reduce impacts of the household appliance, thereby causing relatively bad user experience.

Through research, the inventor of the present invention found that in the prior art, surrounding sound signals of a household appliance cannot be well acquired, and whether volume of the household appliance needs to be decreased cannot be determined through comparison, causing incapacity of automatic adjustment.

In an embodiment of the present invention, if the speech signal of the user is included, whether to decrease the volume of the sound signal sent by the household appliance is determined at least according to a comparison result of a speech signal of a preset user and the sound signal sent by the household appliance. By using the foregoing solutions, when interference of a cooker hood needs to be decreased, by comparing the speech signal of the preset user with the sound signal sent by the household appliance, whether to decrease the volume of the sound signal sent by the household appliance may be determined. Compared with the prior art where a user needs to operate manually, the use of the solutions of the embodiments of the present invention can realize automatic determining and operation, thereby improving user experience.

To make the objectives, features and beneficial effects of the present invention more comprehensible, the specific embodiments of the present invention are further described in detail below with reference to the accompanying drawings.

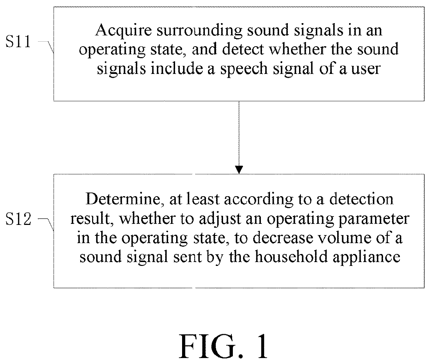

Referring to FIG. 1, FIG. 1 is a flowchart of a noise reduction method for a household appliance according to an embodiment of the present invention. The noise reduction method may include step S11 and step S12:
Step S11. Acquire surrounding sound signals in an operating state, and detect whether the sound signals include a speech signal of a user.
Step S12. Determine, at least according to a detection result, whether to adjust an operating parameter in the operating state, to decrease volume of a sound signal sent by the household appliance.

In a specific implementation of step S11, the household appliance is, a cooker hood.

When the household appliance is in the operating state, a conventional acquiring method in the prior art can be used for acquiring surrounding sound signals of the household appliance.

In a specific implementation of an embodiment of the present invention, the surrounding sound signals of the household appliance may be acquired by using a microphone array.

Specifically, the microphone array may be a system that is formed from a specific quantity of acoustic sensors (which may be microphones), and that is used for sampling and processing spatial characteristics of a sound field.

Further, the microphone array may be selected from: a double-microphone array and a four-microphone array.

In an embodiment of the present invention, a double-microphone array and a four-microphone array are set, which is conducive to forming a mode of three-dimensional sound source positioning, so that the acquired sound signals are more accurate and stereophonic, and accuracy of acquisition is further improved.

Still further, after the sound signals are acquired, background noise can be filtered by using technologies, for example, beamforming and noise reduction, to improve quality of the sound signals.

In a specific implementation, a conventional detecting method may be used for detecting whether the sound signals include a speech signal of a preset user in real time.

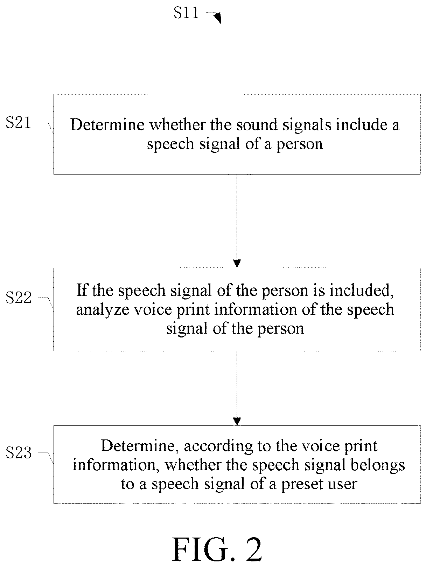

Referring to FIG. 2, FIG. 2 is a flowchart of a specific implementation of step S11 in FIG. 1. The step of detecting whether the sound signals include a speech signal of a user in real time may include step S21 to step S23, and the steps are described in the following.

In step S21, whether the sound signals include a speech signal of a person is determined.

Specifically, a conventional recognition method may be used for determining whether the sound signals include a speech signal of a person.

Further, whether the sound signals include a speech signal of a person may be recognized by using a speech recognition technology, for example, using a proper artificial intelligence (AI) algorithm.

In an embodiment of the present invention, the recognizing whether the sound signals include a speech signal of a person by using a speech recognition technology can improve accuracy of recognition.

In step S22, if the speech signal of the person is included, voice print information of the speech signal of the person is analyzed.

It should be noted that other proper parameters may be further used for analyzing the speech signal of the person. This is not limited in this embodiment of the present invention.

In step S23, whether the speech signal belongs to a speech signal of a preset user is determined according to the voice print information.

Specifically, a voice print may be a sound wave spectrum displayed by an electroacoustical instrument and carrying voice information. Modern scientific research indicates that a voice print is characterized by both specificity and relative stability. After growing up, a person can maintain relative stability in voice for a long period of time.

In the present invention, whether the speech signal belongs to a speech signal of a preset user may be more accurately determined by comparing voice print information.

Still referring to FIG. 1, in a specific implementation of an embodiment of the present invention, before step S12 is performed, content information in the speech signal of the user may be further detected. Only when the user speaks a preset specific sentence, it is determined that the user is talking, and then step S12 is triggered, so that a case that the user sends an unconscious speech signal is effectively excluded (such as, the user snores), to improve accuracy of the noise reduction method.

In a specific implementation of step S12, whether the speech signal of the user is included may be detected, and if included, whether to adjust an operating parameter in the operating state is determined at least according to a detection result.

Further, the step of determining, at least according to a detection result, whether to adjust an operating parameter in the operating state may include: if the speech signal of the user is included, determining, at least according to a comparison result of the speech signal of the user and the sound signal sent by the household appliance, whether to decrease the volume of the sound signal sent by the household appliance.

In the present invention, whether the speech signal of the user is included is determined, and only when detecting that the speech signal of the user is included, whether to decrease the volume of the sound signal sent by the household appliance may be further determined, which effectively reduces the quantity of times of decreasing the volume of the household appliance and avoids affecting normal use of the household appliance.

Further, when it is determined that the speech signal of the user is included, a plurality of methods may be used for determining whether to decrease the volume of the sound signal sent by the household appliance.

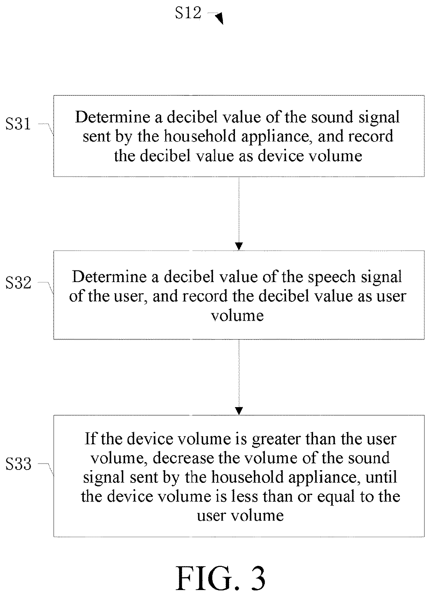

Referring to FIG. 3, FIG. 3 is a partial flowchart of a specific implementation of step S12 in FIG. 1. The step of determining, at least according to a comparison result of the speech signal of the preset user and the sound signal sent by the household appliance, whether to decrease the volume of the sound signal sent by the household appliance may include step S31 to step S33, and the steps are described in the following.

In step S31, a decibel value of the sound signal sent by the household appliance is determined, and recorded as device volume.

In a specific implementation, the decibel value of the sound signal sent by the household appliance may be measured by setting a noise measurement instrument, and the decibel value of the sound signal sent by the household appliance may be further determined based on gear information according to an association between gears of the household appliance and decibel values, to serve as the device volume.

In step S32, a decibel value of the speech signal of the preset user is determined, and recorded as user volume.

In a specific implementation, the decibel value of the speech signal of the user may be measured by setting a noise measurement instrument, to serve as the user volume.

In step S33, if the device volume is greater than the user volume, the volume of the sound signal sent by the household appliance is decreased, until the device volume is less than or equal to the user volume.

In the present invention, a decibel value of the sound signal sent by the household appliance and a decibel value of a speech signal of the user are determined, and only when device volume is greater than the user volume, volume of the sound signal sent by the household appliance is decreased, which can realize functions of performing accurate determining and decreasing the volume of the household appliance.

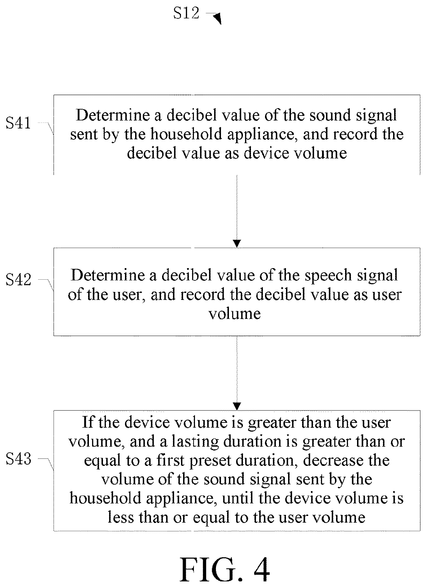

Referring to FIG. 4, FIG. 4 is a partial flowchart of another specific implementation of step S12 in FIG. 1. The step of determining, at least according to a comparison result of the speech signal of the preset user and the sound signal sent by the household appliance, whether to decrease the volume of the sound signal sent by the household appliance may include step S41 to step S43, and the steps are described in the following.

In step S41, a decibel value of the sound signal sent by the household appliance is determined, and recorded as device volume.

In step S42, a decibel value of the speech signal of the preset user is determined, and recorded as user volume.

In a specific implementation, for more detailed content related to steps S41 and S42, reference is made to the descriptions of the steps in FIG. 3, and details are not described herein again.

In step S43, if the device volume is greater than the user volume, and a lasting duration is greater than or equal to a first preset duration, the volume of the sound signal sent by the household appliance is decreased, until the device volume is less than or equal to the user volume.

In an embodiment of the present invention, a decibel value of the sound signal sent by the household appliance and a decibel value of a speech signal of the user are determined, and only when device volume is greater than the user volume, and a lasting duration is greater than or equal to a first preset duration, volume of the sound signal sent by the household appliance is decreased, which can avoid a case that the volume is decreased when a user makes a very short sound, causing excessively high frequency of decreasing, thereby affecting normal operation of a device.

In a specific implementation of an embodiment of the present invention, the household appliance is a cooker hood, and the step of decreasing the volume of the sound signal sent by the household appliance may include: decreasing, by decreasing fan power or a fan rotating speed of the cooker hood, the volume of the sound signal sent by the household appliance.

In an embodiment of the present invention, by decreasing fan power or a fan rotating speed of the cooker hood, the volume of the sound signal sent by the household appliance is decreased.

Specifically, a cooker hood usually has a plurality of gears, and different gears correspond to different suction forces, and have different volume. Therefore, in a specific implementation, by lowering the gear, the volume of the sound signal sent by the household appliance may be decreased.

Further, the noise reduction method for a household appliance further includes a step of restoring the volume of the sound signal sent by the household appliance.

Specifically, the noise reduction method for a household appliance may further include: if the sound signal including the speech signal of the user is converted into a sound signal not including the speech signal of the user, and a lasting duration is greater than or equal to a second preset duration, restoring the volume of the sound signal sent by the household appliance to the device volume.

In an embodiment of the present invention, if the sound signal including the speech signal of the preset user is converted into a sound signal not including the speech signal of the preset user, and a lasting duration is greater than or equal to a second preset duration, the volume of the sound signal sent by the household appliance is restored to the device volume, or the volume of the sound signal sent by the household appliance can be restored after the user speech has ended for a period of time, which is conducive to avoiding a case that the volume is restored when a user has stopped talking for a short period of time, causing excessively high frequency of restoring, thereby affecting normal operation of a device.

In the present invention, if the speech signal of the user is included, whether to decrease the volume of the sound signal sent by the household appliance is determined at least according to a comparison result of a speech signal of a preset user and the sound signal sent by the household appliance. By using the foregoing solutions, when interference of a cooker hood needs to be decreased, by comparing the speech signal of the preset user with the sound signal sent by the household appliance, whether to decrease the volume of the sound signal sent by the household appliance may be determined. Compared with the prior art where a user needs to operate manually, the use of the solutions of the embodiments of the present invention can realize automatic determining and operation, thereby improving user experience.

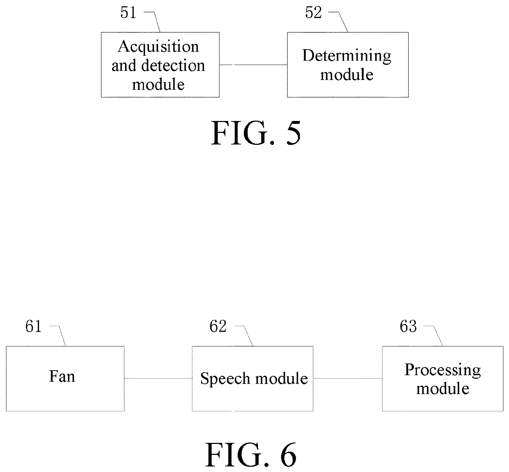

Referring to FIG. 5, FIG. 5 is a schematic structural diagram of a noise reduction apparatus for a household appliance according to an embodiment of the present invention. The apparatus may include:
an acquisition and detection module 51, configured to acquire surrounding sound signals in an operating state, and detect whether the sound signals include a speech signal of a user; and
a determining module 52, configured to determine, at least according to a detection result, whether to adjust an operating parameter in the operating state, to decrease volume of a sound signal sent by the household appliance.

For principles, specific implementations and beneficial effects related to the noise reduction apparatus for a household appliance, reference is made to the above and the related descriptions of the noise reduction method for a household appliance shown in FIG. 1 to FIG. 4. Details are not described herein again.

Referring to FIG. 6, FIG. 6 is a schematic structural diagram of a cooker hood according to an embodiment of the present invention.

The cooker hood includes:
a fan 61;
a speech module 62, acquiring surrounding sound signals in an operating state; and
a processing module 63, detecting whether the sound signals include a speech signal of a user, and determining, at least according to a detection result of the speech module, whether to adjust an operating parameter in the operating state, to decrease volume of a sound signal sent by the cooker hood.

In the present invention, when the cooker hood is in an on state, the speech module 62 acquires surrounding sound signals, and the processing module 63 detects whether the sound signals include a speech signal of a user in real time; and if the speech signal of the user is included, determine, at least according to a detection result, whether to adjust an operating parameter in the operating state, to decrease volume of a sound signal sent by the household appliance. By using the foregoing solutions, when the surrounding sound signals of the cooker hood include the speech signal of the user, there is an opportunity to decrease the volume of the sound signal sent by the cooker hood. Compared with the prior art where a user needs to operate manually, the use of the solutions of the embodiments of the present invention can realize automatic determining and operation, thereby improving user experience.

Further, the processing module 63 determines, at least according to a comparison result of the speech signal of the user and the sound signal sent by the cooker hood, whether to decrease the volume of the sound signal sent by the cooker hood.

In an embodiment of the present invention, if the speech signal of the user is included, whether to decrease the volume of the sound signal sent by the cooker hood is determined at least according to a comparison result of a speech signal of a preset user and the sound signal sent by the cooker hood. By using the foregoing solutions, when interference of a cooker hood needs to be decreased, by comparing the speech signal of the preset user with the sound signal sent by the cooker hood, whether to decrease the volume of the sound signal sent by the cooker hood may be determined. Compared with the prior art where a user needs to operate manually, the use of the solutions of the embodiments of the present invention can realize automatic determining and operation, thereby improving user experience.

Further, the processing module 63 includes: a first device volume determining submodule (not shown), configured to determine a decibel value of the sound signal sent by the cooker hood, and record the decibel value as device volume; a first speech signal decibel value determining submodule (not shown), configured to determine a decibel value of the speech signal of the user, and record the decibel value as user volume; and a first volume processing submodule (not shown), configured to decrease, when the device volume is greater than the user volume, the volume of the sound signal sent by the cooker hood, until the device volume is less than or equal to the user volume.

In an embodiment of the present invention, the first volume processing submodule decreases, by decreasing fan power or a fan rotating speed of the cooker hood, the volume of the sound signal sent by the cooker hood.

Further, the processing module 63 may include: a second device volume determining submodule (not shown), configured to determine a decibel value of the sound signal sent by the cooker hood, and record the decibel value as device volume; a second speech signal decibel value determining submodule (not shown), configured to determine a decibel value of the speech signal of the user, and record the decibel value as user volume; and a second volume processing submodule (not shown), configured to decrease, when the device volume is greater than the user volume, and a lasting duration is greater than or equal to a first preset duration, the volume of the sound signal sent by the cooker hood, until the device volume is less than or equal to the user volume.

In an embodiment of the present invention, the second volume processing submodule decreases, by decreasing fan power or a fan rotating speed of the cooker hood, the volume of the sound signal sent by the cooker hood.

In an embodiment of the present invention, a decibel value of the sound signal sent by the cooker hood and a decibel value of a speech signal of the user are determined, and only when device volume is greater than the user volume, and a lasting duration is greater than or equal to a first preset duration, volume of the sound signal sent by the cooker hood is decreased, which can avoid a case that the volume is decreased when a user makes a very short sound, causing excessively high frequency of decreasing, thereby affecting normal operation of a device.

Further, the processing module 63 may further include: a third volume processing submodule (not shown), configured to restore, when the sound signal including the speech signal of the user is converted into a sound signal not including the speech signal of the user, and a lasting duration is greater than or equal to a second preset duration, the volume of the sound signal sent by the cooker hood to the device volume.

In an embodiment of the present invention, if the sound signal including the speech signal of the preset user is converted into a sound signal not including the speech signal of the preset user, and a lasting duration is greater than or equal to a second preset duration, the volume of the sound signal sent by the cooker hood is restored to the device volume, or the volume of the sound signal sent by the cooker hood can be restored after the user speech has ended for a period of time, which is conducive to avoiding a case that the volume is restored when a user has stopped talking for a short period of time, causing excessively high frequency of restoring, thereby affecting normal operation of a device.

Further, the speech module 62 may acquire the surrounding sound signals of the cooker hood by using a microphone array.

Further, the microphone array may be selected from: a double-microphone array and a four-microphone array.

In an embodiment of the present invention, the surrounding sound signals of the cooker hood are acquired by setting a microphone array, and the microphone array is selected from: a double-microphone array and a four-microphone array, which is conducive to forming a mode of three-dimensional sound source positioning, so that the acquired sound signals are more accurate and stereophonic.

According to the invention, the speech module 62 includes: a speech determining submodule (not shown), configured to determine whether the sound signals include a speech signal of a person; a voice print analysis submodule (not shown), configured to analyze, when the speech signal of the person is included, voice print information of the speech signal of the person; and a speech judging submodule (not shown), configured to determine, according to the voice print information, whether the speech signal belongs to a speech signal of a preset user. Further, the speech determining submodule may recognize whether the sound signals include a speech signal of a person by using a speech recognition technology. For principles, specific implementations and beneficial effects related to the cooker hood, reference is made to the above and the related descriptions of the noise reduction method for a household appliance shown in FIG. 1 to FIG. 4. Details are not described herein again The scope of the invention is defined in the following claims.

## Claims

1. A noise reduction method for a household appliance, namely a cooker hood, the method comprising the following steps:
- acquiring (S11) surrounding sound signals in an operating state, and
- detecting (S11) whether the sound signals comprise a speech signal of a user;
wherein the detecting (S11) comprises:
- determining (S21) whether the sound signals comprise a speech signal of a person;
- analyzing (S22), if the speech signal of the person is comprised, voice print information of the speech signal of the person; and
- determining (S23), according to the voice print information, whether the speech signal belongs to a speech signal of a preset user;
**characterized in that** the method further comprises the following steps:
- determining (S12), at least according to a detection result, whether to adjust an operating parameter in the operating state, to decrease volume of a sound signal sent by the household appliance; wherein the determining (S12) comprises:
- determining (S12), if the speech signal of the user is comprised, at least according to a comparison result of the speech signal of the user and the sound signal sent by the household appliance, whether to decrease the volume of the sound signal sent by the household appliance; with the following sub-steps:
- determining (S31) a decibel value of the sound signal sent by the household appliance, and recording the decibel value as device volume;
- determining (S32) a decibel value of the speech signal of the user, and recording the decibel value as user volume; and
- decreasing (S33), if the device volume is greater than the user volume, the volume of the sound signal sent by the household appliance, until the device volume is less than or equal to the user volume.

2. The noise reduction method for a household appliance according to claim 1, **characterized in that** the determining, at least according to a comparison result of the speech signal of the user and the sound signal sent by the household appliance, whether to decrease the volume of the sound signal sent by the household appliance comprises:
- determining a decibel value of the sound signal sent by the household appliance, and recording the decibel value as device volume;
- determining a decibel value of the speech signal of the user, and recording the decibel value as user volume; and
- if the device volume is greater than the user volume, and a lasting duration is greater than or equal to a first preset duration, decreasing the volume of the sound signal sent by the household appliance, until the device volume is less than or equal to the user volume.

3. The noise reduction method for a household appliance according to claim 1 or 2, **characterized by** further comprising:
if the sound signal comprising the speech signal of the user is converted into a sound signal not comprising the speech signal of the user, and a lasting duration is greater than or equal to a second preset duration, restoring the volume of the sound signal sent by the household appliance to the device volume.

4. The noise reduction method for a household appliance according to claim 1 or 2, **characterized in that** the household appliance is a cooker hood, and the decreasing the volume of the sound signal sent by the household appliance comprises:
decreasing, by decreasing fan power or a fan rotating speed of the cooker hood, the volume of the sound signal sent by the household appliance.

5. The noise reduction method for a household appliance according to claim 1, **characterized in that** the acquiring surrounding sound signals comprises:
acquiring the surrounding sound signals of the household appliance by using a microphone array.

6. The noise reduction method for a household appliance according to claim 5, **characterized in that** the microphone array is selected from: a double-microphone array and a four-microphone array.

7. The noise reduction method for a household appliance according to one of the above claims, **characterized in that** the determining whether the sound signals comprise a speech signal of a person comprises:
recognizing whether the sound signals comprise a speech signal of a person by using a speech recognition technology.

8. A cooker hood comprising:
a fan (61);
a speech module (62), acquiring surrounding sound signals in an operating state; the speech module (62) comprising:
- a speech determining submodule, configured to determine whether the sound signals comprise a speech signal of a person;
- a voice print analysis submodule, configured to analyze, when the speech signal of the person is comprised, voice print information of the speech signal of the person; and
- a speech judging submodule, configured to determine, according to the voice print information, whether the speech signal belongs to a speech signal of a preset user
and
a processing module (63)
- detecting whether the sound signals comprise a speech signal of a user, **characterized in that** the processing module determines, at least according to a detection result of the speech module, whether to adjust an operating parameter in the operating state, to decrease volume of a sound signal sent by the cooker hood;
wherein the processing module (63) determines, at least according to a comparison result of the speech signal of the user and the sound signal sent by the cooker hood, whether to decrease the volume of the sound signal sent by the cooker hood; and wherein the processing module comprises:
- a first device volume determining submodule, configured to determine (S31) a decibel value of the sound signal sent by the cooker hood, and record the decibel value as device volume;
- a first speech signal decibel value determining submodule, configured to determine (S32) a decibel value of the speech signal of the user, and record the decibel value as user volume; and
- a first volume processing submodule, configured to decrease (S33), when the device volume is greater than the user volume, the volume of the sound signal sent by the cooker hood, until the device volume is less than or equal to the user volume.

9. The cooker hood according to claim 8, **characterized in that**
the first volume processing submodule decreases, by decreasing fan power or a fan rotating speed of the cooker hood, the volume of the sound signal sent by the cooker hood.

10. The cooker hood according to claim 8, **characterized in that** the processing module comprises:
- a second device volume determining submodule, configured to determine a decibel value of the sound signal sent by the cooker hood, and record the decibel value as device volume;
- a second speech signal decibel value determining submodule, configured to determine a decibel value of the speech signal of the user, and record the decibel value as user volume; and
- a second volume processing submodule, configured to decrease, when the device volume is greater than the user volume, and a lasting duration is greater than or equal to a first preset duration, the volume of the sound signal sent by the cooker hood, until the device volume is less than or equal to the user volume.

11. The cooker hood according to claim 10, **characterized in that**
the second volume processing submodule decreases, by decreasing fan power or a fan rotating speed of the cooker hood, the volume of the sound signal sent by the cooker hood.

12. The cooker hood according to claim 8 or 10, **characterized in that** the processing module further comprises:
a third volume processing submodule, configured to restore, when the sound signal comprising the speech signal of the user is converted into a sound signal not comprising the speech signal of the user, and a lasting duration is greater than or equal to a second preset duration, the volume of the sound signal sent by the cooker hood to the device volume.

13. The cooker hood according to claim 8, **characterized in that** the speech module acquires the surrounding sound signals of the cooker hood by using a microphone array.

14. The cooker hood according to claim 13, **characterized in that** the microphone array is selected from: a double-microphone array and a four-microphone array.

15. The cooker hood according to claim 14, **characterized in that** the speech determining submodule recognizes whether the sound signals comprise a speech signal of a person by using a speech recognition technology.

## Patentansprüche

1. Geräuschdämpfungsverfahren für ein Haushaltsgerät, insbesondere eine Dunstabzugshaube, das folgende Schritte umfasst:
- Erfassen (S11) von akustischen Signalen in der Umgebung in einem Betriebszustand und
- Detektieren (S11), ob die akustischen Signale ein Sprachsignal von einem Benutzer enthalten,
wobei das Detektieren (S11) Folgendes umfasst:
- Ermitteln (S21), ob die akustischen Signale ein Sprachsignal von einer Person enthalten,
- wenn das Sprachsignal von der Person enthalten ist, Analysieren (S22) von Stimmprofilinformationen im Sprachsignal von der Person und
- Ermitteln (S23) entsprechend den Stimmprofilinformationen, ob das Sprachsignal zu einem Sprachsignal von einem voreingestellten Benutzer gehört,
**dadurch gekennzeichnet, dass** das Verfahren ferner folgende Schritte umfasst:
- Ermitteln (S12) zumindest entsprechend einem Detektionsergebnis, ob im Betriebszustand ein Betriebsparameter angepasst werden sollte, um eine Lautstärke eines von dem Haushaltsgerät abgegebenen akustischen Signals zu verringern, wobei das Ermitteln (S12) Folgendes umfasst:
- wenn das Sprachsignal von dem Benutzer enthalten ist, Ermitteln (S12) zumindest entsprechend einem Ergebnis des Vergleichs des Sprachsignals von dem Benutzer mit dem von dem Haushaltsgerät abgegebenen akustischen Signal, ob die Lautstärke des von dem Haushaltsgerät abgegebenen akustischen Signals verringert werden sollte, mit folgenden Teilschritten:
- Ermitteln (S31) eines Dezibelwerts für das von dem Haushaltsgerät abgegebene akustische Signal und Aufzeichnen des Dezibelwerts als Vorrichtungslautstärke,
- Ermitteln (S32) eines Dezibelwerts für das Sprachsignal von dem Benutzer und Aufzeichnen des Dezibelwerts als Benutzerlautstärke und
- wenn die Vorrichtungslautstärke über der Benutzerlautstärke liegt, Verringern (S33) der Lautstärke des von dem Haushaltsgerät abgegebenen akustischen Signals, bis die Vorrichtungslautstärke höchstens der Benutzerlautstärke entspricht.

2. Geräuschdämpfungsverfahren für ein Haushaltsgerät nach Anspruch 1, **dadurch gekennzeichnet, dass** das Ermitteln zumindest entsprechend einem Ergebnis des Vergleichs des Sprachsignals von dem Benutzer mit dem von dem Haushaltsgerät abgegebenen akustischen Signal, ob die Lautstärke des von dem Haushaltsgerät abgegebenen akustischen Signals verringert werden sollte, Folgendes umfasst:
- Ermitteln eines Dezibelwerts für das von dem Haushaltsgerät abgegebene akustische Signal und Aufzeichnen des Dezibelwerts als Vorrichtungslautstärke,
- Ermitteln eines Dezibelwerts für das Sprachsignal von dem Benutzer und Aufzeichnen des Dezibelwerts als Benutzerlautstärke und
- wenn die Vorrichtungslautstärke über der Benutzerlautstärke liegt und eine Fortdauer mindestens einer ersten voreingestellten Dauer entspricht, Verringern der Lautstärke des von dem Haushaltsgerät abgegebenen akustischen Signals, bis die Vorrichtungslautstärke höchstens der Benutzerlautstärke entspricht.

3. Geräuschdämpfungsverfahren für ein Haushaltsgerät nach Anspruch 1 oder 2, **dadurch gekennzeichnet, dass** es ferner Folgendes umfasst:
wenn das akustische Signal, das das Sprachsignal von dem Benutzer enthält, in ein akustisches Signal umgewandelt wird, das kein Sprachsignal von dem Benutzer enthält, und eine Fortdauer mindestens einer zweiten voreingestellten Dauer entspricht, Zurücksetzen der Lautstärke des von dem Haushaltsgerät abgegebenen akustischen Signals auf die Vorrichtungslautstärke.

4. Geräuschdämpfungsverfahren für ein Haushaltsgerät nach Anspruch 1 oder 2, **dadurch gekennzeichnet, dass** es sich bei dem Haushaltsgerät um eine Dunstabzugshaube handelt, und das Verringern der Lautstärke des von dem Haushaltsgerät abgegebenen akustischen Signals Folgendes umfasst:
Verringern der Lautstärke des von dem Haushaltsgerät abgegebenen akustischen Signals durch Verringern der Gebläseleistung oder einer Gebläsedrehzahl der Dunstabzugshaube.

5. Geräuschdämpfungsverfahren für ein Haushaltsgerät nach Anspruch 1, **dadurch gekennzeichnet, dass** das Erfassen von akustischen Signalen in der Umgebung Folgendes umfasst:
Erfassen der akustischen Signale in der Umgebung des Haushaltsgeräts unter Verwendung einer Mikrofonanordnung.

6. Geräuschdämpfungsverfahren für ein Haushaltsgerät nach Anspruch 5, **dadurch gekennzeichnet, dass** die Mikrofonanordnung unter einer Doppelmikrofonanordnung und einer Anordnung von vier Mikrofonen ausgewählt wird.

7. Geräuschdämpfungsverfahren für ein Haushaltsgerät nach einem der vorhergehenden Ansprüche, **dadurch gekennzeichnet, dass** das Ermitteln, ob die akustischen Signale ein Sprachsignal von einer Person enthalten, Folgendes umfasst:
Erkennen unter Verwendung einer Spracherkennungstechnologie, ob die akustischen Signale ein Sprachsignal von einer Person enthalten.

8. Dunstabzugshaube, die Folgendes umfasst:
ein Gebläse (61),
ein Sprachmodul (62), das in einem Betriebszustand akustische Signale in der Umgebung erfasst, wobei das Sprachmodul (62) Folgendes umfasst:
- ein Sprachermittlungsteilmodul, das so konfiguriert ist, dass es ermittelt, ob die akustischen Signale ein Sprachsignal von einer Person enthalten,
- ein Stimmprofilanalyseteilmodul, das so konfiguriert ist, dass es, wenn das Sprachsignal von der Person enthalten ist, Stimmprofilinformationen im Sprachsignal von der Person analysiert, und
- ein Sprachbeurteilungsteilmodul, das so konfiguriert ist, dass es entsprechend den Stimmprofilinformationen ermittelt, ob das Sprachsignal zu einem Sprachsignal von einem voreingestellten Benutzer gehört, und
ein Verarbeitungsmodul (63),
- das detektiert, ob die akustischen Signale ein Sprachsignal von einem Benutzer enthalten,
**dadurch gekennzeichnet, dass** das Verarbeitungsmodul zumindest entsprechend einem Detektionsergebnis des Sprachmoduls ermittelt, ob im Betriebszustand ein Betriebsparameter angepasst werden sollte, um eine Lautstärke eines von der Dunstabzugshaube abgegebenen akustischen Signals zu verringern,
wobei das Verarbeitungsmodul (63) zumindest entsprechend einem Ergebnis des Vergleichs des Sprachsignals von dem Benutzer mit dem von der Dunstabzugshaube abgegebenen akustischen Signal ermittelt, ob die Lautstärke des von der Dunstabzugshaube abgegebenen akustischen Signals verringert werden sollte, und
wobei das Verarbeitungsmodul Folgendes umfasst:
- ein erstes Vorrichtungslautstärkeermittlungsteilmodul, das so konfiguriert ist, dass es einen Dezibelwert für das von der Dunstabzugshaube abgegebene akustische Signal ermittelt (S31) und den Dezibelwert als Vorrichtungslautstärke aufzeichnet,
- ein erstes Sprachsignal-Dezibelwertermittlungsteilmodul, das so konfiguriert ist, dass es einen Dezibelwert für das Sprachsignal von dem Benutzer ermittelt (S32) und den Dezibelwert als Benutzerlautstärke aufzeichnet, und
- ein erstes Lautstärkeverarbeitungsteilmodul, das so konfiguriert ist, dass es, wenn die Vorrichtungslautstärke über der Benutzerlautstärke liegt, die Lautstärke des von der Dunstabzugshaube abgegebenen akustischen Signals verringert (S33), bis die Vorrichtungslautstärke höchstens der Benutzerlautstärke entspricht.

9. Dunstabzugshaube nach Anspruch 8, **dadurch gekennzeichnet, dass** das erste Lautstärkeverarbeitungsteilmodul die Lautstärke des von der Dunstabzugshaube abgegebenen akustischen Signals durch Verringern der Gebläseleistung oder einer Gebläsedrehzahl der Dunstabzugshaube verringert.

10. Dunstabzugshaube nach Anspruch 8, **dadurch gekennzeichnet, dass** das Verarbeitungsmodul Folgendes umfasst:
- ein zweites Vorrichtungslautstärkeermittlungsteilmodul, das so konfiguriert ist, dass es einen Dezibelwert für das von der Dunstabzugshaube abgegebene akustische Signal ermittelt und den Dezibelwert als Vorrichtungslautstärke aufzeichnet,
- ein zweites Sprachsignal-Dezibelwertermittlungsteilmodul, das so konfiguriert ist, dass es einen Dezibelwert für das Sprachsignal von dem Benutzer ermittelt und den Dezibelwert als Benutzerlautstärke aufzeichnet, und
- ein zweites Lautstärkeverarbeitungsteilmodul, das so konfiguriert ist, dass es, wenn die Vorrichtungslautstärke über der Benutzerlautstärke liegt und eine Fortdauer mindestens einer ersten voreingestellten Dauer entspricht, die Lautstärke des von der Dunstabzugshaube abgegebenen akustischen Signals verringert, bis die Vorrichtungslautstärke höchstens der Benutzerlautstärke entspricht.

11. Dunstabzugshaube nach Anspruch 10, **dadurch gekennzeichnet, dass** das zweite Lautstärkeverarbeitungsteilmodul die Lautstärke des von der Dunstabzugshaube abgegebenen akustischen Signals durch Verringern der Gebläseleistung oder einer Gebläsedrehzahl der Dunstabzugshaube verringert.

12. Dunstabzugshaube nach Anspruch 8 oder 10, **dadurch gekennzeichnet, dass** das Verarbeitungsmodul ferner Folgendes umfasst:
ein drittes Lautstärkeverarbeitungsteilmodul, das so konfiguriert ist, dass es, wenn das akustische Signal, das das Sprachsignal von dem Benutzer enthält, in ein akustisches Signal umgewandelt wird, das kein Sprachsignal von dem Benutzer enthält, und eine Fortdauer mindestens einer zweiten voreingestellten Dauer entspricht, die Lautstärke des von der Dunstabzugshaube abgegebenen akustischen Signals auf die Vorrichtungslautstärke zurücksetzt.

13. Dunstabzugshaube nach Anspruch 8, **dadurch gekennzeichnet, dass** das Sprachmodul die akustischen Signale in der Umgebung der Dunstabzugshaube unter Verwendung einer Mikrofonanordnung erfasst.

14. Dunstabzugshaube nach Anspruch 13, **dadurch gekennzeichnet, dass** die Mikrofonanordnung unter einer Doppelmikrofonanordnung und einer Anordnung von vier Mikrofonen ausgewählt wird.

15. Dunstabzugshaube nach Anspruch 14, **dadurch gekennzeichnet, dass** das Sprachermittlungsteilmodul unter Verwendung einer Spracherkennungstechnologie erkennt, ob die akustischen Signale ein Sprachsignal von einer Person enthalten.

## Revendications

1. Procédé de réduction de bruit pour un appareil ménager, à savoir une hotte de cuisine, le procédé comprenant les étapes suivantes :
- l'acquisition (S11) de signaux sonores environnants dans un état de fonctionnement, et
- la détection (S11) du fait de savoir si les signaux sonores comprennent un signal vocal d'un utilisateur ;
dans lequel la détection (S11) comprend :
- la détermination (S21) du fait de savoir si les signaux sonores comprennent un signal vocal d'une personne ;
- l'analyse (S22), lorsque le signal vocal de la personne est compris, des informations d'empreinte vocale du signal vocal de la personne ; et
- la détermination (S23), en fonction des informations d'empreinte vocale, du fait de savoir si le signal vocal appartient à un signal vocal d'un utilisateur prédéfini ;
**caractérisé en ce que** le procédé comprend en outre les étapes suivantes :
- la détermination (S12), au moins en fonction d'un résultat de détection, du fait de savoir s'il convient d'ajuster un paramètre de fonctionnement dans l'état de fonctionnement, de diminuer le volume d'un signal sonore envoyé par l'appareil ménager ; dans lequel la détermination (S12) comprend :
- la détermination (S12), si le signal vocal de l'utilisateur est compris, au moins selon un résultat de comparaison entre le signal vocal de l'utilisateur et le signal sonore envoyé par l'appareil ménager, du fait de savoir s'il convient de diminuer le volume du signal sonore envoyé par l'appareil ménager ; avec les sous-étapes suivantes :
- détermination (S31) d'une valeur en décibels du signal sonore envoyé par l'appareil ménager, et enregistrement de la valeur en décibels comme volume de dispositif ;
- détermination (S32) d'une valeur en décibels du signal vocal de l'utilisateur, et enregistrement de la valeur en décibels comme volume d'utilisateur ; et
- diminution (S33), si le volume de dispositif est supérieur au volume d'utilisateur, du volume du signal sonore envoyé par l'appareil ménager, jusqu'à ce que le volume de dispositif soit inférieur ou égal au volume d'utilisateur.

2. Procédé de réduction du bruit pour un appareil ménager selon la revendication 1, **caractérisé en ce que** la détermination, au moins selon un résultat de comparaison entre le signal vocal de l'utilisateur et le signal sonore envoyé par l'appareil ménager, du fait de savoir s'il convient de diminuer le volume du signal sonore envoyé par l'appareil ménager, comprend :
- la détermination d'une valeur en décibels du signal sonore envoyé par l'appareil ménager, et l'enregistrement de la valeur en décibels comme volume de dispositif ;
- la détermination d'une valeur en décibels du signal vocal de l'utilisateur, et l'enregistrement de la valeur en décibels comme volume d'utilisateur ; et
- si le volume de dispositif est supérieur au volume d'utilisateur et une durée supérieure ou égale à une première durée prédéfinie, la diminution du volume du signal sonore envoyé par l'appareil ménager, jusqu'à ce que le volume de dispositif soit inférieur ou égal au volume d'utilisateur.

3. Procédé de réduction du bruit pour un appareil ménager selon la revendication 1 ou 2, **caractérisé en ce qu'**il comprend en outre :
si le signal sonore comprenant le signal vocal de l'utilisateur est converti en un signal sonore ne comprenant pas le signal vocal de l'utilisateur et si une durée est supérieure ou égale à une deuxième durée prédéfinie, le rétablissement du volume du signal sonore envoyé par l'appareil ménager au volume de dispositif.

4. Procédé de réduction du bruit pour un appareil ménager selon la revendication 1 ou 2, **caractérisé en ce que** l'appareil ménager est une hotte de cuisine et la diminution du volume du signal sonore envoyé par l'appareil ménager comprend :
la diminution, en diminuant la puissance du ventilateur ou une vitesse de rotation du ventilateur de la hotte de cuisine, du volume du signal sonore envoyé par l'appareil ménager.

5. Procédé de réduction du bruit pour un appareil ménager selon la revendication 1, **caractérisé en ce que** l'acquisition de signaux sonores environnants comprend :
l'acquisition de signaux sonores environnants de l'appareil ménager en utilisant un ensemble de microphones.

6. Procédé de réduction du bruit pour un appareil ménager selon la revendication 5, **caractérisé en ce que** l'ensemble de microphones est choisi parmi : un ensemble à deux microphones et un ensemble à quatre microphones.

7. Procédé de réduction du bruit pour un appareil ménager selon l'une des revendications précédentes, **caractérisé en ce que** la détermination du fait de savoir si les signaux sonores comprennent un signal vocal d'une personne comprend :
la reconnaissance du fait de savoir si les signaux sonores comprennent un signal vocal d'une personne en utilisant une technologie de reconnaissance vocale.

8. Hotte de cuisine comprenant :
un ventilateur (61) ;
un module vocal (62), acquérant des signaux sonores environnants dans un état de fonctionnement ; le module vocal (62) comprenant :
- un sous-module de détermination vocale, configuré pour déterminer si les signaux sonores comprennent un signal vocal d'une personne ;
- un sous-module d'analyse d'empreinte vocale, configuré pour analyser, lorsque le signal vocal de la personne est compris, des informations d'empreinte vocale du signal vocal de la personne ; et
- un sous-module d'évaluation vocale, configuré pour déterminer, en fonction des informations sur l'empreinte vocale, si le signal vocal appartient à un signal vocal d'un utilisateur prédéfini
et
un module de traitement (63)
- détectant le fait de savoir si les signaux sonores comprennent un signal vocal d'un utilisateur, **caractérisée en ce que** le module de traitement détermine, au moins en fonction d'un résultat de détection du module vocal, s'il convient d'ajuster un paramètre de fonctionnement dans l'état de fonctionnement, pour diminuer le volume d'un signal sonore envoyé par la hotte de cuisine ;
dans laquelle le module de traitement (63) détermine, au moins en fonction d'un résultat de comparaison entre le signal vocal de l'utilisateur et le signal sonore envoyé par la hotte de cuisine, s'il convient de diminuer le volume du signal sonore envoyé par la hotte de cuisine ; et dans laquelle le module de traitement comprend :
- un premier sous-module de détermination de volume de dispositif, configuré pour déterminer (S31) une valeur en décibels du signal sonore envoyé par la hotte de cuisine, et enregistrer la valeur en décibels comme volume de dispositif ;
- un premier sous-module de détermination de la valeur en décibels du signal vocal, configuré pour déterminer (S32) une valeur en décibels du signal vocal de l'utilisateur et enregistrer la valeur en décibels comme volume d'utilisateur ; et
- un premier sous-module de traitement du volume, configuré pour diminuer (S33), lorsque le volume de dispositif est supérieur au volume d'utilisateur, le volume du signal sonore envoyé par la hotte de cuisine, jusqu'à ce que le volume de dispositif soit inférieur ou égal au volume d'utilisateur.

9. Hotte de cuisine selon la revendication 8, **caractérisée en ce que** le premier sous-module de traitement du volume diminue, en diminuant la puissance du ventilateur ou une vitesse de rotation du ventilateur de la hotte de cuisine, le volume du signal sonore envoyé par la hotte de cuisine.

10. Hotte de cuisine selon la revendication 8, **caractérisée en ce que** le module de traitement 10 comprend :
- un deuxième sous-module de détermination de volume de dispositif, configuré pour déterminer une valeur en décibels du signal sonore envoyé par la hotte de cuisine, et enregistrer la valeur en décibels comme volume de dispositif ;
- un deuxième sous-module de détermination de la valeur en décibels du signal vocal, configuré pour déterminer une valeur en décibels du signal vocal de l'utilisateur et enregistrer la valeur en décibels comme volume d'utilisateur ; et
- un deuxième sous-module de traitement du volume, configuré pour diminuer, lorsque le volume de dispositif est supérieur au volume d'utilisateur et une durée supérieure ou égale à une première durée prédéfinie, le volume du signal sonore envoyé par la hotte de cuisine, jusqu'à ce que le volume de dispositif soit inférieur ou égal au volume d'utilisateur.

11. Hotte de cuisine selon la revendication 10, **caractérisée en ce que** le deuxième sous-module de traitement du volume diminue, en diminuant la puissance du ventilateur ou une vitesse de rotation du ventilateur de la hotte de cuisine, le volume du signal sonore envoyé par la hotte de cuisine.

12. Hotte de cuisine selon la revendication 8 ou 10, **caractérisée en ce que** le module de traitement comprend en outre :
un troisième sous-module de traitement du volume, configuré pour rétablir, lorsque le signal sonore comprenant le signal vocal de l'utilisateur est converti en un signal sonore ne comprenant pas le signal vocal de l'utilisateur et lorsqu'une durée est supérieure ou égale à une deuxième durée prédéfinie, le volume du signal sonore envoyé par la hotte de cuisine au volume de dispositif.

13. Hotte de cuisine selon la revendication 8, **caractérisée en ce que** le module vocal acquiert les signaux sonores environnants de la hotte de cuisine en utilisant un ensemble de microphones.

14. Hotte de cuisine selon la revendication 13, **caractérisée en ce que** l'ensemble de microphones est choisi parmi : un ensemble à deux microphones et un ensemble à quatre microphones.

15. Hotte de cuisine selon la revendication 14, **caractérisée en ce que** le sous-module de détermination vocale reconnaît si les signaux sonores comprennent un signal vocal d'une personne en utilisant une technologie de reconnaissance vocale.
